(19) Europäisches Patentamt
European Patent Office
Office européen des brevets

(11) **EP 4 570 097 A1**

(12) **EUROPEAN PATENT APPLICATION**
published in accordance with Art. 153(4) EPC

(43) Date of publication:
**18.06.2025 Bulletin 2025/25**

(21) Application number: **23854291.4**

(22) Date of filing: **09.08.2023**

(51) International Patent Classification (IPC):
**A24F 40/53** (2020.01)     **A24F 40/40** (2020.01)
**G01B 7/00** (2006.01)

(86) International application number:
**PCT/CN2023/111857**

(87) International publication number:
**WO 2024/037388 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.08.2022  CN 202211003418**

(71) Applicant: **Shenzhen Merit Technology Co., Ltd.**
**Shenzhen, Guangdong 518105 (CN)**

(72) Inventors:
• **WANG, Xiaoran**
  **Shenzhen, Guangdong 518105 (CN)**
• **LI, Yu**
  **Shenzhen, Guangdong 518105 (CN)**
• **JIN, Zutao**
  **Shenzhen, Guangdong 518105 (CN)**

(74) Representative: **Manitz Finsterwald**
**Patent- und Rechtsanwaltspartnerschaft mbB**
**Martin-Greif-Strasse 1**
**80336 München (DE)**

(54)    **AEROSOL GENERATION DEVICE AND MOVABLE COVER DETECTION AND CONTROL DEVICE THEREOF**

(57)    An aerosol generation device and a movable cover detection and control device thereof. The movable cover detection and control device comprises a detection electrode (110) and a main control device (120), and the main control device (120) is connected to the detection electrode (110). The detection electrode (110) generates a capacitance change according to a relative positional relationship with respect to a movable cover (210) of the aerosol generation device; the main control device (120) analyzes the position state of the movable cover (210) according to the detected capacitance, and controls the aerosol generation device according to the position state of the movable cover (210).

FIG. 1

## Description

## CROSS-REFERENCE TO RELATED APPLICATION

This application claims priority to Chinese Patent Application No. 202211003418.9, filed with the China National Intellectual Property Administration and entitled "Aerosol Generation Device and Movable Cover Detection and Control Device thereof" on August 19, 2022, which is incorporated herein by reference in its entirety.

## TECHNICAL FIELD

The present invention relates to the field of atomization technology, and particularly to an aerosol generation device, and a detection and control device for a movable cover thereof.

## BACKGROUND

An aerosol generation device is an electronic device which atomizes an atomization medium to form an aerosol that can be inhaled by a user, and is configured to heat the atomization medium at a low temperature (usually 350 degrees Celsius) to form the aerosol. Such a heating mode can prevent the generated aerosol from containing ingredients and/or odors that the user does not need, and accordingly is favored by a wide range of users. The aerosol generation device is generally provided with a movable cover configured to cover an atomization medium receiving cavity. The switching of operation modes of the aerosol generation device is achieved by detecting and determining a moving position and an action of the movable cover.

## SUMMARY

In one aspect of the present application, a detection and control device for a movable cover of an aerosol generation device is provided, including: a detection electrode, configured to generate a capacitance change according to a relative position relationship between the detection electrode and the movable cover of the aerosol generation device; and a main control device, connected to the detection electrode and configured to analyze a position state of the movable cover according to a detected capacitance and control the aerosol generation device according to the position state of the movable cover.

In an embodiment, the position state of the movable cover includes a closed state and an open state, the main control device is configured to control the aerosol generation device to enter a low-power consumption dormant state when determining that the movable cover is in the closed state according to the capacitance change, and the main control device is configured to control the aerosol generation device to enter a standby operation state when determining that the movable cover is in the open state according to the capacitance change.

In an embodiment, the open state comprises a completely open state and an opening in progress state, the main control device is configured to determine that the movable cover is in the opening in progress state when detecting that a capacitance changes from a first capacitance to a second capacitance, and control the aerosol generation device to enter the standby operation state, and the main control device is configured to determine that the movable cover is in the completely open state when detecting that the capacitance changes from the first capacitance to a third capacitance, and control the aerosol generation device to enter a heating operation state or the standby operation state.

In an embodiment, the closed state comprises a completely closed state and a closing in progress state, the main control device is configured to determine that the movable cover is in the closing in progress state when detecting that a capacitance changes from a third capacitance to a second capacitance, and control the aerosol generation device to maintain a current operation state, and the main control device is configured to determine that the movable cover is in the completely closed state when detecting that the capacitance changes from the second capacitance to a first capacitance, and control the aerosol generation device to enter the low-power consumption dormant state.

In an embodiment, the detection electrode and a movable cover electrode plate form parallel electrode plates.

In an embodiment, the detection electrode is a segmented-type electrode plate or is a linear electrode plate.

In an embodiment, the number of the detection electrodes is more than two, the detection electrodes form parallel electrode plates, and the movable cover is located between or outside the parallel electrode plates.

In an embodiment, each detection electrode among the parallel electrode plates is a segmented-type electrode plate or a linear electrode plate.

In an embodiment, the main control device comprises a detection unit and a main control unit, and the detection unit is configured to be connected to the detection electrode and the main control unit.

In an embodiment, the detection electrode is configured to be connected to an input port of the detection unit, and the movable cover electrode plate is configured to be connected to a power ground or an output port of the detection unit.

In an embodiment, the detection electrode is configured to be connected to a power ground or an output port of the detection unit, and the movable cover electrode plate is configured to be connected to an input port of the detection unit.

In an embodiment, the detection electrode is a segmented-type electrode plateand is connected to a power ground and an input port of the detection unit respectively.

In an embodiment, the detection electrode is a segmented-type electrode plate and is connected to an output port and an input port of the detection unit respectively.

In an embodiment, the main control device is configured to pre-store a corresponding relationship between different positions of the movable cover and capacitance, and determine the current position state of the movable cover by searching the corresponding relationship after an actual capacitance is detected by the detection unit.

In another aspect of the present application, an aerosol generation device is provided, including the above-mentioned detection and control device for the movable cover.

The details of one or more embodiments of the present invention are set forth in the accompanying drawings and the description below. Other features, purposes, and advantages of the present application will be obvious from the description, drawings, and claims.

**BRIEF DESCRIPTION OF THE DRAWINGS**

In order to more clearly illustrate the technical solution in the embodiments of the present invention or the conventional technology, the accompanying drawings required for use in the embodiments or the conventional technology descriptions are briefly introduced below. Obviously, these drawings described below are merely some embodiments of the present invention, and those skilled in the art can obtain other drawings based on these drawings without any creative effort.

FIG. 1 is a schematic structure diagram of a detection and control device for a movable cover of an aerosol generation device according to an embodiment.

FIG. 2 is a schematic structure diagram of a detection electrode according to an embodiment.

FIG. 3 is a schematic structure diagram of a detection electrode according to another embodiment.

FIG. 4 is a schematic structure diagram of a detection electrode according to another embodiment.

FIG. 5 is a schematic structure diagram of a detection electrode according to another embodiment.

FIG. 6 is a schematic diagram showing a connection between a main control device and a detection electrode according to an embodiment.

FIG. 7 is a schematic diagram showing a connection between a main control device and a detection electrode according to another embodiment.

FIG. 8 is a schematic connection diagram of a self-capacitance detection electrode according to an embodiment.

FIG. 9 is a schematic connection diagram of a self-capacitance detection electrode according to another embodiment.

FIG. 10 is a schematic connection diagram of a mutual capacitance detection electrode according to an embodiment.

FIG. 11 is a schematic connection diagram of a mutual capacitance detection electrode according to another embodiment.

FIG. 12 is a schematic diagram showing a position of a movable cover located at position 1 relative to a detection electrode according to an embodiment.

FIG. 13 is a schematic diagram showing a position of a movable cover located at position 2 relative to a detection electrode according to an embodiment.

FIG. 14 is a schematic diagram showing a position of a movable cover located at position 3 relative to a detection electrode according to an embodiment.

**DETAILED DESCRIPTION OF THE EMBODIMENTS**

In order to make the purpose, technical solution and advantages of the present application more clearly understood, the present application is further described in detail below in conjunction with the accompanying drawings and embodiments. It should be appreciated that the specific embodiments described herein are merely used for illustrating the present application, rather than limiting the present application.

Unless defined otherwise, all technical and scientific terms used herein have the same meaning as commonly understood by those skilled in the art to which this application belongs. The terms used in the description of the present application are only for the purpose of describing specific embodiments and are not intended to limit the present application.

It should be appreciated that the "connection" in the following embodiments should be regarded as "electrical connection", "communication connection", etc., if there exist electrical signals or data transmissions among the connected circuits, modules, units, etc.

The aerosol generation device known to the applicant generally detects the position of the movable cover with the aid of a Hall sensor. The circuit design of this type of technical solution requires that the Hall sensor is directly distributed at a relevant position near the movable cover. The functionality of the device is not high, the structural space occupancy is large, the mechanical design is complex, and the reliability is low. In view of this, the present application provides an aerosol generation device, and a detection and control device for a movable cover thereof. A detection electrode is introduced, which generates a capacitance change according to a relative position relationship between the detection electrode and a movable cover of the aerosol generation device. A main control device is connected to the detection electrode, analyzes a position state of the movable cover according to the detected capacitance, and controls the aerosol generation device according to the position state of the movable cover. Accordingly, a non-contact detection of the position state of the movable cover can be implemented by monitoring the capacitance change, which simplifies the structural design and the circuit, reduces the number of materials, improves the functionality of the device, improves safety, and provides a better interactive experience. The aerosol generation device may further include a device housing which is provided with an atomization medium receiving cavity configured to receive the atomization medium. The movable cover is configured to cover the atomization medium receiving cavity and can be moved back and forth directionally on a surface of the device housing to implement dust-proof and water vapor-proof functions. In an embodiment, the atomization medium is a solid medium for generating an aerosol when heated. The atomization medium may include a tobacco material, or an aroma component may be further added into the tobacco material. The aerosolization medium contains a volatile tobacco flavor compound which is released from a substrate upon heating. In other embodiments, the atomization medium may also be a liquid medium which is heated and atomized to form the aerosol.

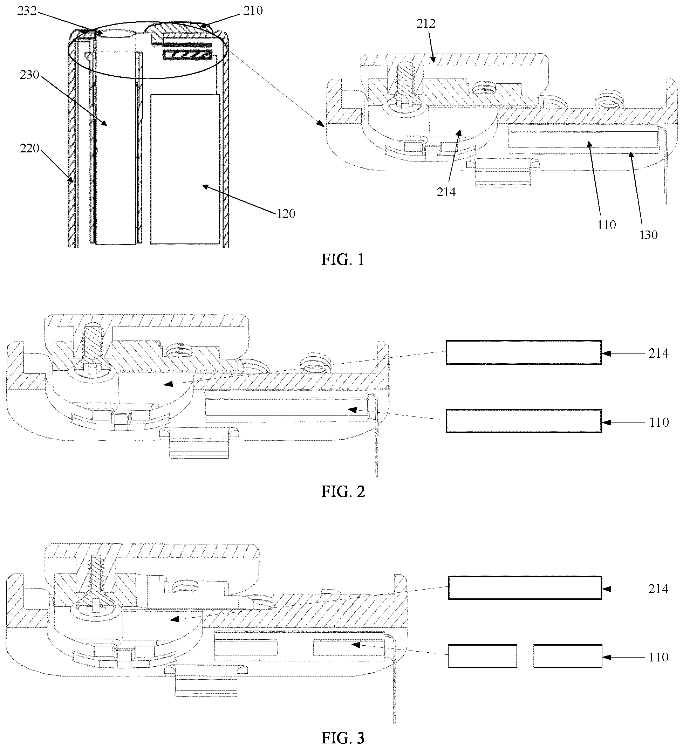

Referring to FIG. 1, in an embodiment, a detection and control device for a movable cover of an aerosol generation device is provided, which may include a detection electrode 110 and a main control device 120. The main control device 120 is connected to the detection electrode 110. The detection electrode 110 generates a capacitance change according to a relative position relationship between the detection electrode and the movable cover 210 of the aerosol generation device. The main control device 120 analyzes a position state of the movable cover 210 according to a detected capacitance, and controls the aerosol generation device according to the position state of the movable cover 210.

The aerosol generation device may further include a device housing 220 configured to mount the movable cover 210 and the detection electrode 110, and receive the main control device 120. The device housing 220 is provided with an atomization medium receiving cavity 230, and the movable cover 210 can directionally move back and forth on the surface of the device housing 220 (e.g., a linear motion or a rotation around a central axis) to close or open an atomization medium insertion port 232 of the atomization medium receiving cavity 230. The movable cover 210 may specifically include a movable cover outer cover 212 located on a side of the device housing 220 (in an embodiment, on an outer surface of the housing, or in other embodiments, may also be partially or completely received in one end of the housing) and a structural portion located inside the device housing 220, both of which may be formed as a one-piece structural assembly or may be discrete structural assemblies.

The movable cover 210 may be completely or partially of a metal structure, and a metal structure portion of the movable cover 210 may serve as a movable cover electrode plate 214. The detection electrode 110 may be fixed to an inner surface of the device housing 220, or may be provided at other positions inside the device housing 220, as long as the detection electrode can generate the capacitance change according to a relative position relationship between the detection electrode and the movable cover electrode plate 214. In the embodiment, the detection electrode 110 is fixed to the inner surface of the device housing 220 at a position corresponding to the movable cover 210. The detection electrode 110 may include one or more groups of parallel electrode plates, or form one or more groups of parallel electrode plates with the movable cover electrode plate 214.

There may be one or more detection electrodes 110. A parallel capacitor may be formed among a plurality of detection electrodes 110, or a parallel capacitor may be formed between the detection electrode 110 and the movable cover electrode plate 214. When the detection electrode 110 and the movable cover electrode plate 214 both serve as electrode plates, the capacitance calculation formula is as follows:

$$C = \frac{k\varepsilon_0 S}{d}$$

where C denotes a capacitance between the electrode plates, k denotes a relative permittivity between materials of the electrode plates, $\varepsilon_0$ denotes a dielectric constant in vacuum, S denotes a relative area between the electrode plates, and d denotes a distance between the electrode plates. According to the structure of the detection electrode 110 and different relative position relationships between the detection electrode and the movable cover electrode plate 214, the analysis of the position state of the movable cover 210 according to the capacitance change can be summarized as the following cases.

Case 1: a parallel capacitor is formed between the movable cover electrode plate 214 and the detection electrode 110. A material and spacing of the electrode plates are constant, and the capacitance C is positively correlated with the relative area S between the electrode plates. Based on this, the relative position of the movable cover 210 with respect to the detection electrode 110 can be reflected.

Case 2: a parallel capacitor is formed between the detection electrodes 110. The material and relative area of the electrode plates are constant. The movable cover electrode plate 214 enters between the detection electrodes 110 as a third electrode, which is equivalent to changing the distance between the electrode plates. The capacitance C is negatively correlated with the distance d between the electrode plates. Based on this, the relative position of the movable cover 210 with respect to the detection electrode 110 can be reflected.

Case 3: the parallel capacitor formed between the detection electrodes 110 has an edge effect. When the movable cover electrode plate 214 as the third electrode is adjacent to one side of the detection electrode 110, the edge effect of the electrode plate can be changed. The capacitance C is correlated with the edge effect of the electrode plate. Based on this, the relative position of the movable cover 210 with respect to the detection electrode 110 can be reflected.

In addition, the detection and control device for the movable cover may further include a detection electrode carrier 130. The detection electrode 110 is provided on the detection electrode carrier 130. For example, the detection electrode carrier 130 may be fixed inside the device housing 220, and the detection electrode 110 may be provided on the detection electrode carrier 130, in order to facilitate the mounting and fixation of the detection electrode 110.

When the position of the movable cover 210 changes, the relative position relationship between the movable cover electrode plate 214 and the detection electrode 110 may change, thereby generating a capacitance change which is detected by the main control device 120, and the main control device 120 may then perform a relevant operation or response according to the capacitance change. For example, the main control device 120 can pre-store a corresponding relationship between different positions of the movable cover 210 and capacitances. After the actual capacitance is detected, the current position state of the movable cover 210 can be determined by searching the corresponding relationship, and then the aerosol generation device is controlled according to the current position state of the movable cover 210. For example, when it is detected that the movable cover 210 is in a closed state (i.e., the atomization medium insertion port 232 is closed), the aerosol generation device is controlled to be in a low-power consumption dormant state. When it is detected that the movable cover 210 is in an open state (i.e., the atomization medium insertion port 232 is open), the aerosol generation device is controlled to enter a standby operation state or a heating operation state. It should be appreciated that operating parameters of the aerosol generation device in different states can be preset, which will not be described in detail here.

According to the above-mentioned detection and control device for the movable cover of the aerosol generation device, the detection electrode 110 generates the capacitance change according to the relative position relationship between the detection electrode and the movable cover 210 of the aerosol generation device, and the main control device 120 analyzes the position state of the movable cover 210 according to the detected capacitance, and controls the aerosol generation device according to the position state of the movable cover 210. The non-contact detection of the position state of the movable cover 210 is implemented by monitoring the capacitance change, the detection reliability is high, the detection structure is simplified, and the space occupancy rate is reduced.

The specific structure of the detection electrode 110, and the position relationship between the detection electrode and the movable cover electrode plate 214 are not unique. The detection electrodes 110 may be distributed in a moving direction of the movable cover 210. When the movable cover electrode plate 214 serves as the third plate, the relative position of the movable cover electrode plate 214 with respect to the detection electrodes 110 may be outside the detection electrodes 110, or between the detection electrodes 110. The detection electrode 110 may be designed in a linear distribution mode or a segmented-type distribution mode, and the edge of the detection electrode 110 may be straight, or regular zigzag, wavy, circular, trapezoidal, or the like.

When the number of the detection electrodes 110 is equal to one, the detection electrode 110 may be designed in a linear distribution mode. In an embodiment, as shown in FIG. 2, the detection electrode 110 and the movable cover electrode plate 214 form parallel electrode plates, and the detection electrode 110 is a linear electrode plate. The detection electrode 110 may also be designed in a segmented-type distribution mode. In another embodiment, as shown in FIG. 3, the detection electrode 110 and the movable cover electrode plate 214 form parallel electrode plates, and the detection electrode 110 is a segmented-type electrode plate.

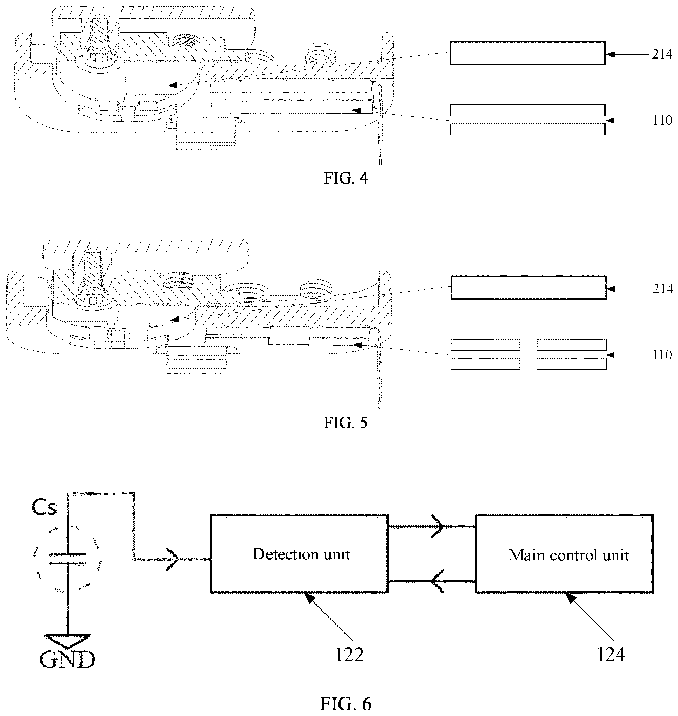

When there exists a plurality of detection electrodes 110, the detection electrodes 110 can be designed in a linear distribution mode. In an embodiment, as shown in FIG. 4, the number of detection electrodes 110 is more than two and these detection electrodes form parallel electrode plates, the movable cover electrode plate 214 is located between or outside the parallel electrode plates, and each detection electrode 110 among the parallel electrode plates is a linear electrode plate. The detection electrodes 110 may also be designed in a segmented-type distribution mode. In another embodiment, as shown in FIG. 5, the number of detection electrodes 110 is more than two and these detection electrodes form parallel electrode plates, the movable cover electrode plate 214 is located between or outside the parallel electrode plates, and each detection electrode 110 among the parallel electrode plates is the segmented-type electrode plate.

The specific structure of the main control device 120 is not unique. In an embodiment, as shown in FIG. 6, the main control device 120 includes a detection unit 122 and a main control unit 124. The detection unit 122 is connected to the detection electrode 110 and the main control unit 124. The detection unit 122 may be a discrete capacitance detection device (such as a touch chip or a capacitance sensor chip, etc.) electrically connected to the main control unit 124, or may be a main control chip with a built-in capacitance detection module in the main control unit 124. The detection unit 122 converts the capacitance change into an electrical quantity, such as a voltage, a current, a resistance, a frequency, a phase, etc., and then the main control unit 124 processes the electrical quantity data output by the detection unit 122 to determine the position state of the movable cover 210. In addition, the main control device 120 may further include a heating unit and/or a power supply module connected to the main control unit 124.

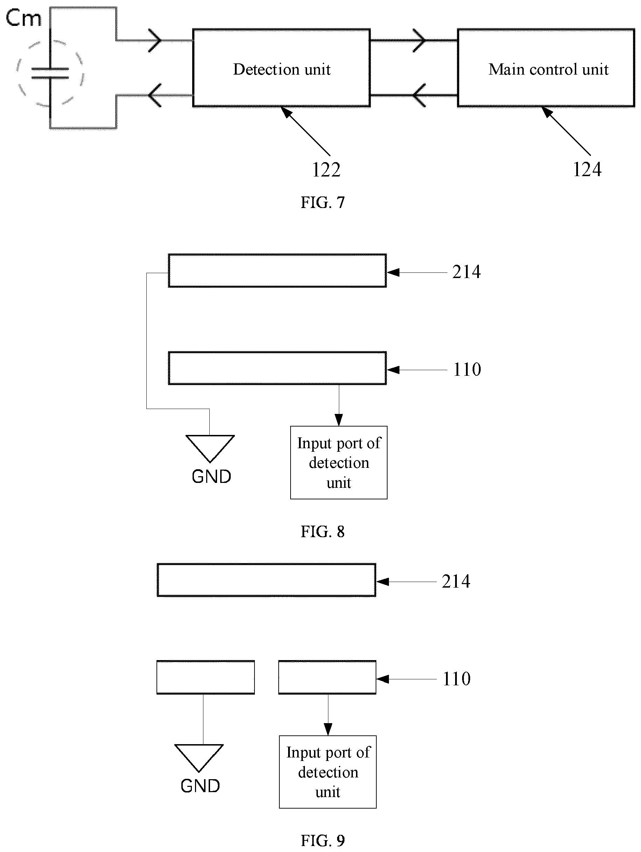

The capacitance detection principle of the detection unit 122 includes a mutual capacitance detection and a self-capacitance detection. As shown in FIG. 6, for the self-capacitance detection mode, one electrode plate or a group of electrode plates are fixedly connected to power ground, and another electrode plate or another group of electrode plates are electrically connected to the detection unit 122. The detection electrode 110 and the movable cover electrode plate 214 may be equivalent to a self-capacitor $Cs$. A capacitance value of the self-capacitor is detected by the detection unit 122, and the main control unit 124 may perform a corresponding operation or response according to a change in the detection value. As shown in FIG. 7, for the mutual capacitance detection mode, all electrode plates are electrically connected to the detection unit 122 and are not connected to the power ground. The detection electrode 110 and the movable cover electrode plate 214 may be equivalent to a mutual capacitor Cm. A capacitance value of the mutual capacitor is detected by the detection unit 122, and the main control unit 124 may perform a corresponding operation or response according to a change in the detection value.

In an embodiment, the detection electrode 110 is connected to an input port of the detection unit 122, and the movable cover electrode plate 214 is connected to the power ground or an output port of the detection unit 122. In other embodiments, the detection electrode 110 may be connected to the power ground or the output port of the detection unit 122, and the movable cover electrode plate 214 may be connected to the input port of the detection unit 122. Furthermore, in an embodiment, the detection electrode 110 is the segmented-type electrode plate and is connected to the power ground and the input port of the detection unit 122 respectively. In other embodiments, the detection electrode 110 is the segmented-type electrode plate and is connected to the output port of the detection unit 122 and the input port of the detection unit 122 respectively.

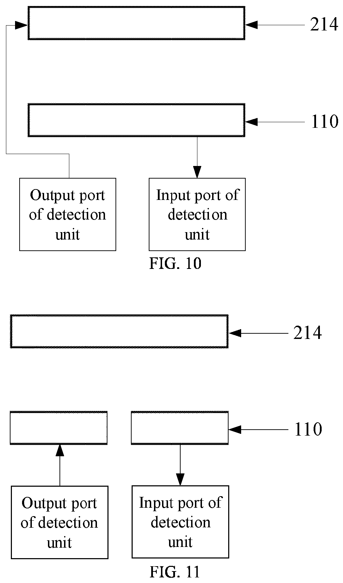

Specifically, when the detection electrode 110 and the movable cover electrode plate 214 form parallel electrode plates, for the self-capacitance detection mode, as shown in FIG. 8, the detection electrode 110 may be connected to the input port of the detection unit 122, and the movable cover electrode plate 214 may be connected to the power ground. Alternatively, the movable cover electrode plate 214 may be connected to the input port of the detection unit 122, and the detection electrode 110 may be connected to the power ground. Furthermore, as shown in FIG. 9, when the detection electrode 110 is the segmented-type electrode plate, the detection electrode 110 may be connected to the input port of the detection unit 122 and the power ground respectively. For the mutual capacitance detection mode, as shown in FIG. 10, the movable cover electrode plate 214 may be connected to the output port of the detection unit 122, and the detection electrode 110 may be connected to the input port of the detection unit 122. Alternatively, the detection electrode 110 may be connected to the output port of the detection unit 122, and the movable cover electrode plate 214 may be connected to the input port of the detection unit 122. Further, as shown in FIG. 11, when the detection electrode 110 is the segmented-type electrode plate, the detection electrode 110 may be connected to the output port and the input port of the detection unit 122 respectively.

In addition, when the number of the detection electrodes 110 is more than two and the detection electrodes form parallel electrode plates, for the self-capacitance detection mode, part of the detection electrodes 110 may be connected to the input port of the detection unit 122, and part of the detection electrodes 110 may be connected to the power ground. For the mutual capacitance detection mode, part of the detection electrodes 110 may be connected to the output port of the detection unit 122, and part of the detection electrodes 110 may be connected to the input port of the detection unit 122.

The control mode in which the main control device 120 controls the aerosol generation device according to the position state of the movable cover 210 is not unique. In an embodiment, the position state of the movable cover 210 includes a closed state and an open state. When the movable cover 210 is in the closed state, the main control device 120 controls the aerosol generation device to enter a low-power consumption dormant state. When the movable cover 210 is in the open state, the main control device 120 controls the aerosol generation device to enter a standby operation state.

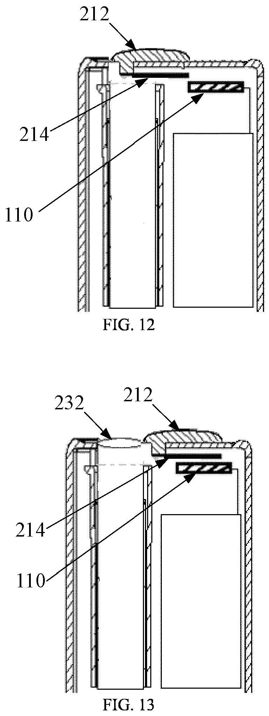

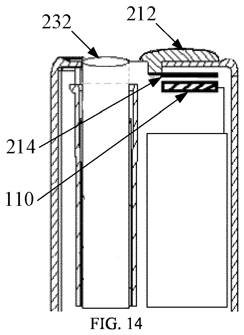

Specifically, as shown in FIGS. 12 to 14, a position where the movable cover 210 covers in place (i.e., the movable cover 210 completely covers the atomization medium insertion port 232) is defined as a position 1. A position of the movable cover 210 between the position where the movable cover covers in place and a position where the movable cover opens in place is defined as a position 2 (i.e., the movable cover 210 partially covers the atomization medium insertion port 232, or the movable cover 210 does not covers the atomization medium insertion port 232 absolutely and the movable cover 210 can still move to a position away from the atomization medium insertion port 232). A position where the movable cover 210 opens in place is defined as a position 3 (i.e., the movable cover 210 does not covers the atomization medium insertion port 232 absolutely, but the movable cover 210 cannot continue to move in a direction away from the atomization medium insertion port 232). It should be appreciated that stoppers can be provided on the housing corresponding to the position 1 and the position 3 of the movable cover 210 to limit the movable cover 210 to the position 1 and the position 3. A capacitance detection value when the movable cover 210 is in position 1 is equal to a first capacitance C1, the capacitance detection value when the movable cover 210 is in position 2 is equal to a second capacitance C2, and the capacitance detection value when the movable cover 210 is in position 3 is equal to a third capacitance C3. The main control unit 124 can perform a corresponding operation according to an actual detected capacitance change. It should be appreciated that a capacitance range at position 1 may be defined as C1, the capacitance range at position 2 may be defined as C2 correspondingly, and the capacitance range at position 3 may be defined as C3.

When the movable cover 210 moves from the position 1 to the position 2 or the position 3, the atomization medium insertion port 232 is opened, and the capacitance of the detection electrode 110 changes from C1 to C2 or C3. When detecting the capacitance change, the main control unit 124 may determine the movable cover 210 as being in the open state. If the aerosol generation device is previously in the low-power consumption dormant state, the main control unit 124 may automatically wake up the aerosol generation device, and display interactive information, then aerosol generation device enters the standby operation state, and the main control unit may monitor a start-up signal in real time such as a button signal or an insertion detection signal of an atomization medium, etc.

When the movable cover 210 moves from the position 2 or the position 3 to the position 1, the atomization medium insertion port 232 is closed. The capacitance of the detection electrode 110 changes from C2 or C3 to C1. When detecting the capacitance change, the main control unit 124 determines the movable cover 210 as being in the closed state. If the aerosol generation device is previously in the standby operation state, the main control unit 124 may display the interactive information, and then the aerosol generation device enters the low-power consumption dormant state. If the aerosol generation device is previously in the heating operation state, the main control unit 124 may stop heating and display the interactive information, and then the aerosol generation device enters the low-power consumption dormant state.

Further, in an embodiment, the open state includes a completely open state and an opening in progress state. The opening in progress state refers to that the movable cover 210 moves from the position 1 to the position 2, partially covering or absolutely not covering the atomization medium insertion port 232. The completely open state refers to that the movable cover 210 moves from the position 1 or the position 2 to the position 3, absolutely does not cover the atomization medium insertion port 232. When detecting that the movable cover 210 is in the opening in progress state, the main control device 120 controls the aerosol generation device to enter the standby operation state. When detecting that the movable cover 210 is in the completely open state, the main control device 120 controls the aerosol generation device to enter the heating operation state or the standby operation state.

Specifically, when the movable cover 210 moves from the position 1 to the position 2, the atomization medium insertion port 232 is opened. The capacitance of the detection electrode 110 changes from C1 to C2. When detecting the capacitance change, the main control unit 124 may determine the movable cover 210 as being in the opening in progress state. If the aerosol generation device is previously in the low-power consumption dormant state, the main control unit 124 may automatically wake up the aerosol generation device, and display the interactive information, and then the aerosol generation device enters the standby operation state, the main control unit may monitor the start-up signal in real time such as a button signal or an insertion detection signal of an atomization medium.

When the movable cover 210 moves from the position 1 to the position 3, the atomization medium insertion port 232 is opened. The capacitance of the detection electrode 110 changes from C1 to C3. The main control unit 124 detects the capacitance change and determines the movable cover 210 as being in the completely open state. If the aerosol generation device is previously in the low-power consumption dormant state, the main control unit 124 may automatically wake up the aerosol generation device, and display the interactive information, and then the aerosol generation device may enter the heating operation state.

When the movable cover 210 moves from the position 2 to position 3, the atomization medium insertion port 232 is opened. The capacitance of the detection electrode 110 changes from C2 to C3. When detecting the capacitance change, the main control unit 124 may determine the movable cover 210 as being in the completely open state. If the aerosol generation device is previously in the standby operation state, the main control unit 124 may start heating, and display the interactive information, and then the aerosol generation device enters the heating operation state. If the aerosol generation device is previously in the heating operation state, the main control unit 124 may stop heating, and display the interactive information, then the aerosol generation device enters the standby operation state, and the main control unit monitors the start-up signal in real time such as a button signal or an insertion detection signal of an atomization medium.

Furthermore, in an embodiment, the closed state includes a completely closed state and a closing in progress state. The closing in progress state refers to that the movable cover 210 moves from the position 3 to the position 2, partially covering or absolutely not covering the atomization medium insertion port 232. The completely closed state refers to that the movable cover 210 moves from the position 3 or the position 2 to the position 1, and completely covers the atomization medium insertion port 232. When detecting that the movable cover 210 is in the closing in progress state, the main control device 120 controls the aerosol generation device to maintain the current operation state. When detecting that the movable cover 210 is in the completely closed state, the main control device 120 controls the aerosol generation device to enter the low-power consumption dormant state.

Specifically, when the movable cover 210 moves from the position 3 to the position 2, the atomization medium insertion port 232 is opened. The capacitance of the detection electrode 110 changes from C3 to C2. The main control unit 124 monitors the capacitance change, determines the movable cover 210 as being in the closing in progress state, and maintains the previous operation state.

When the movable cover 210 moves from the position 2 to the position 1, the atomization medium insertion port 232 is closed. The capacitance of the detection electrode 110 changes from C2 to C1. When detecting the capacitance change, the main control unit 124 may determine the movable cover 210 as being in the completely closed state. If the aerosol generation device is previously in the standby operation state, the main control unit 124 may display the interactive information, and then the aerosol generation device enters the low-power consumption dormant state. If the aerosol generation device is previously in the heating operation state, the main control unit 124 may stop heating and display the interactive information, and then the aerosol generation device enters the low-power consumption dormant state.

When the movable cover 210 moves from the position 3 to the position 1, the atomization medium insertion port 232 is closed. The capacitance of the detection electrode 110 changes from C3 to C1. When detecting the capacitance change, the main control unit 124 may determine that the movable cover 210 as being in the completely closed state. If the aerosol generation device is previously in the heating operation state, the main control unit 124 may stop heating and display the interactive information, and then the aerosol generation device enters the low-power consumption dormant state.

In an embodiment, an aerosol generation device is further provided, which may include the above-mentioned detection and control device for the movable cover. In addition, the aerosol generation device may further include a device housing, the device housing is provided with an atomization medium receiving cavity, and the device housing is configured to mount a movable cover and a detection electrode, and receive a main control device. The movable cover can be moved back and forth on a surface of the device housing directionally to close or open the atomization medium insertion port of the atomization medium receiving cavity.

According to the above-mentioned aerosol generation device, the non-contact detection of the position state of the movable cover can be implemented by monitoring the capacitance change, accordingly the detection reliability is higher, the detection structure is simplified, and the space occupancy rate is reduced.

The technical features in the above embodiments may be combined arbitrarily. In order to make the description concise, all possible combinations of the technical features in the above embodiments are not described. However, as long as there is no contradiction in the combinations of these technical features, these combinations should be considered to be within the scope of the present application.

The above-described embodiments only express several implementation modes of the present invention, and the descriptions are relatively specific and detailed, but should not be construed as limiting the scope of the present invention. It should be noted that, those of ordinary skill in the art can make several modifications and improvements without departing from the concept of the present invention, and these all fall within the protection scope of the present invention. Therefore, the protection scope of the present invention should be subject to the appended claims.

## Claims

1. A detection and control device for a movable cover of an aerosol generation device, comprising:

   a detection electrode, configured to generate a capacitance change according to a relative position relationship between the detection electrode and the movable cover; and
   a main control device, connected to the detection electrode and configured to analyze a position state of the movable cover according to a detected capacitance and control the aerosol generation device according to the position state of the movable cover.

2. The detection and control device for the movable cover according to claim 1, wherein the position state of the movable cover comprises a closed state and an open state, the main control device is configured to control the aerosol generation device to enter a low-power consumption dormant state when determining that the movable cover is in the closed state according to the capacitance change, and the main control device is configured to control the aerosol generation device to enter a standby operation state when determining that the movable cover is in the open state according to the capacitance change.

3. The detection and control device for the movable cover according to claim 2, wherein the open state comprises a completely open state and an opening in progress state, the main control device is configured to determine that the movable cover is in the opening in progress state when detecting that a capacitance changes from a first capacitance to a second capacitance, and control the aerosol generation device to enter the standby operation state, and the main control device is configured to determine that the movable cover is in the completely open state when detecting that the capacitance changes from the first capacitance to a third capacitance, and control the aerosol generation device to enter a heating operation state or the standby operation state.

4. The detection and control device for the movable cover according to claim 2, wherein the closed state comprises a completely closed state and a closing in progress state, the main control device is configured to determine that the movable cover is in the closing in progress state when detecting that a capacitance changes from a third capacitance to a second capacitance, and control the aerosol generation device to maintain a current operation state, and the main control device is configured to determine that the movable cover is in the completely closed state when detecting that the capacitance changes from the second capacitance to a first capacitance, and control the aerosol generation device to enter the low-power consumption dormant state.

5. The detection and control device for the movable cover according to claim 1, wherein the detection electrode and a movable cover electrode plate form parallel electrode plates.

6. The detection and control device for the movable cover according to claim 5, wherein the detection electrode is a segmented-type electrode plate or is a linear electrode plate.

7. The detection and control device for the movable cover according to claim 1, wherein the number of the detection electrodes is more than two, the detection electrodes form parallel electrode plates, and the movable cover is located between or outside the parallel electrode plates.

8. The detection and control device for the movable cover according to claim 7, wherein each detection electrode among the parallel electrode plates is a segmented-type electrode plate or a linear electrode plate.

9. The detection and control device for the movable cover according to any one of claims 1 to 8, wherein the main control device comprises a detection unit and a main control unit, and the detection unit is configured to be connected to the detection electrode and the main control unit.

10. The detection and control device for the movable cover according to claim 9, wherein the detection electrode is configured to be connected to an input port of the detection unit, and the movable cover electrode plate is configured to be connected to a power ground or an output port of the detection unit.

11. The detection and control device for the movable cover according to claim 9, wherein the detection electrode is configured to be connected to a power ground or an output port of the detection unit, and the movable cover electrode plate is configured to be connected to an input port of the detection unit.

12. The detection and control device for the movable cover according to claim 9, wherein the detection electrode is a segmented-type electrode plate and is connected to a power ground and an input port of the detection unit respectively.

13. The detection and control device for the movable cover according to claim 9, wherein the detection electrode is a segmented-type electrode plate and is connected to an output port and an input port of the detection unit respectively.

14. The detection and control device for the movable cover according to claim 9, wherein the main control device is configured to pre-store a corresponding relationship between different positions of the movable cover and capacitances, and determine the current position state of the movable cover by searching the corresponding relationship after an actual capacitance is detected by the detection unit.

15. An aerosol generation device, comprises the detection and control device for the movable cover according to any one of claims 1 to 14.

FIG. 1

FIG. 2

FIG. 3

FIG. 4

FIG. 5

FIG. 6

Cm

Detection unit

Main control unit

122

124

FIG. 7

214

110

GND

Input port of
detection
unit

FIG. 8

214

110

GND

Input port of
detection
unit

FIG. 9

214

110

| Output port of detection unit | Input port of detection unit |

FIG. 10

214

| | |

| Output port of detection unit | Input port of detection unit |

110

FIG. 11

FIG. 12

FIG. 13

FIG. 14

## INTERNATIONAL SEARCH REPORT

International application No.

**PCT/CN2023/111857**

### A. CLASSIFICATION OF SUBJECT MATTER

A24F40/53(2020.01)i; A24F40/40(2020.01)i; G01B7/00(2006.01)i

According to International Patent Classification (IPC) or to both national classification and IPC

### B. FIELDS SEARCHED

Minimum documentation searched (classification system followed by classification symbols)

IPC,CPC: A24F40, G01B7

Documentation searched other than minimum documentation to the extent that such documents are included in the fields searched

Electronic data base consulted during the international search (name of data base and, where practicable, search terms used)

CNABS, CNTXT, DWPI, ENTXT, JPTXT, CNKI: 气溶胶, 烟, 盖, 门, 电容, 极板, 电极, 移, 滑, 推, 待机, 休眠, aerosol, tobacco, clos+, cover?, open+, mov+, slid+, position, activ+, detect+, sensor, electrode, capacitance, electric capacity

### C. DOCUMENTS CONSIDERED TO BE RELEVANT

| Category* | Citation of document, with indication, where appropriate, of the relevant passages | Relevant to claim No. |
|---|---|---|
| PX | CN 115363283 A (SHENZHEN MAISHI TECHNOLOGY CO., LTD.) 22 November 2022 (2022-11-22) claims 1-14, description, paragraphs 41-73, and figures 1-14 | 1-13, 15 |
| PX | CN 218483795 U (SHENZHEN MAISHI TECHNOLOGY CO., LTD.) 17 February 2023 (2023-02-17) claims 1-11, description, paragraphs 38-70, and figures 1-14 | 1-13, 15 |
| Y | CN 113766844 A (JAPAN TOBACCO INTERNATIONAL SA) 07 December 2021 (2021-12-07) description, paragraphs 66-156, and figures 1-6 | 1-15 |
| Y | CN 110612034 A (KT&G CORP.) 24 December 2019 (2019-12-24) description, paragraph 138, and figure 5 | 1-15 |
| Y | CN 111601520 A (JAPAN TOBACCO INTERNATIONAL SA) 28 August 2020 (2020-08-28) description, paragraph 84, and figure 6 | 1-15 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 November 2023** | **24 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

<table>
<tr><td colspan="2"></td><td>International application No.<br>**PCT/CN2023/111857**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | CN 114223955 A (XI'AN WENXIAN SEMICONDUCTOR TECHNOLOGY CO., LTD.) 25 March 2022 (2022-03-25)<br>      entire document | 1-15 |
| A | CN 215347037 U (SHENZHEN FIRST UNION TECHNOLOGY CO., LTD.) 31 December 2021 (2021-12-31)<br>      entire document | 1-15 |
| A | WO 2019012359 A1 (PHILIP MORRIS PRODUCTS SA) 17 January 2019 (2019-01-17) | |

Form PCT/ISA/210 (second sheet) (July 2022)

**INTERNATIONAL SEARCH REPORT**
**Information on patent family members**

International application No.

**PCT/CN2023/111857**

| Patent document cited in search report | | | Publication date (day/month/year) | Patent family member(s) | | | Publication date (day/month/year) |
|---|---|---|---|---|---|---|---|
| CN | 115363283 | A | 22 November 2022 | None | | | |
| CN | 218483795 | U | 17 February 2023 | None | | | |
| CN | 113766844 | A | 07 December 2021 | WO | 2020225105 | A1 | 12 November 2020 |
| | | | | JP | 2022530257 | A | 28 June 2022 |
| | | | | KR | 20220002979 | A | 07 January 2022 |
| | | | | TW | 202041158 | A | 16 November 2020 |
| | | | | TWI | 772788 | B | 01 August 2022 |
| | | | | EP | 3962301 | A1 | 09 March 2022 |
| | | | | US | 2022225675 | A1 | 21 July 2022 |
| | | | | CA | 3137375 | A1 | 12 November 2020 |
| CN | 110612034 | A | 24 December 2019 | JP | 2020521438 | A | 27 July 2020 |
| | | | | JP | 6927648 | B2 | 01 September 2021 |
| | | | | US | 2023148663 | A1 | 18 May 2023 |
| | | | | KR | 20180129637 | A | 05 December 2018 |
| | | | | KR | 102231228 | B1 | 24 March 2021 |
| | | | | EP | 3632240 | A1 | 08 April 2020 |
| | | | | EP | 3632240 | A4 | 21 July 2021 |
| | | | | WO | 2018216961 | A1 | 29 November 2018 |
| | | | | US | 2020093185 | A1 | 26 March 2020 |
| CN | 111601520 | A | 28 August 2020 | EP | 3703520 | A1 | 09 September 2020 |
| | | | | US | 2020337377 | A1 | 29 October 2020 |
| | | | | RU | 2020118125 | A | 02 December 2021 |
| | | | | WO | 2019115758 | A1 | 20 June 2019 |
| | | | | CA | 3081145 | A1 | 20 June 2019 |
| | | | | JP | 2021506233 | A | 22 February 2021 |
| | | | | KR | 20200097263 | A | 18 August 2020 |
| CN | 114223955 | A | 25 March 2022 | None | | | |
| CN | 215347037 | U | 31 December 2021 | None | | | |
| WO | 2019012359 | A1 | 17 January 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211003418